# EUROPEAN PATENT APPLICATION

(11) **EP 1 975 890 A2**
(43) Date of publication of application: **01.10.2008**
(21) Application number: 08003850.8
(22) Date of filing: 29.02.2008
(51) Int. Cl.: G07D 11/00

(54) **Security system for pneumatic mail and device for application thereof**

(30) Priority: 01.03.2007 ES 200700607
(71) Applicant: CRIMPLA, S. L., Alaquás Valencia (ES)
(72) Inventor: Yusa Irles, Luis, Alaquás (Valencia) (ES)
(74) Representative: Soler Lerma, Santiago

(57) **Abstract**

SECURITY SYSTEM FOR PNEUMATIC MAIL AND DEVICE FOR APPLICATION THEREOF wherein this device essentially consists of a hollow capsule formed by at least two parts which, once closed, cannot be opened again without being broken, this being achieved by a spear lock and a line of fragile points that support the union of the two parts of the capsule. Each capsule is identified unequivocally and uniquely and the sender enters in a database both the identification of the capsule and of its contents, so that the recipient can query this database and thereby verify that the capsule has not been manipulated and that the content agrees with that stated by the sender.

## Description

The invention object of the description is, as its name indicates, a system meant to allow secure delivery by pneumatic mail and the device, a special capsule, designed for this purpose.

The system is essentially based on the unequivocal and unique identification of the delivery capsule which, once closed, cannot be opened without breaking It, providing full control of its contents from the time of dispatch to the time of opening and examination and thereby preventing any potential manipulation during its path.

The field of the art to which it is applied is delivery by pneumatic mail.

### BACKGROUND OF THE INVENTION

Pneumatic mail systems have been known since the middle of the 19th Century, and essentially consist of compressed air ducts in which are Introduced capsules with a shape and size appropriate for moving inside said ducts being driven by the air, these capsules being hollow and having a sealed cover that allows housing inside them the object to be conveyed.

Currently, they are in widespread use for transporting documents, money or samples, and they often have a cover which, in some cases, can incorporate a lock.

However, from the moment in which the sender introduces the capsule with the object to be transported in the duct until it reaches its recipient, it is difficult to know whether it has been opened along the way.

Often the capsule is inserted in the system with money, for example, and until this money is accounted for the capsule passes through intermediate stations, re-routers, terminal stations and other devices, being collected at the end of its path by a money delivery company that carries it to another location for accounting.

Knowing that the content remains unaltered is an obvious advantage which, in some cases, will allow assigning responsibilities if the actual and expected contents of the capsule are not the same.

### DESCRIPTION OF THE INVENTION

The invention proposed herein is a security system based on a perfect identification of each capsule individually, so that there cannot be two capsules with the same identification, wherein after these capsules are closed it is necessary to break them in order to open them again.

The combination of unique capsules and the impossibility of opening them leads to a high-security pneumatic mail communications system.

The capsules can be identified by any system guaranteeing that it is impossible to duplicate a specific identification. For comfort and security purposes, it is advisable to use a linear or two-dimensional barcode system.

The most secure way to identify the capsule is by printing the identification code on its surface, although less secure systems can be used such as codes printed on adhesive labels without representing a different Invention.

In this way, the sender will introduce the reference of the capsule and its contents in a database and the recipient will have access to this database to check that the contents stated by the sender corresponds with the actual contents of the capsule when it is opened.

To ensure that the capsule is not opened during its path from the sender to the recipient, the capsule has a clip locking system that can only be opened by breaking the capsule.

### BRIEF DESCRIPTION OF THE FIGURES

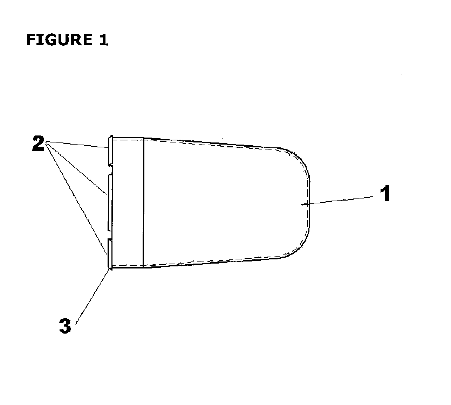

FIGURE 1 shows one of the parts (1) of the capsule, specifically that with an open face peripherally provided with several tabs (2) configuring a spear lock (3) when closing the capsule by engaging slits provided in the other part of the capsule.

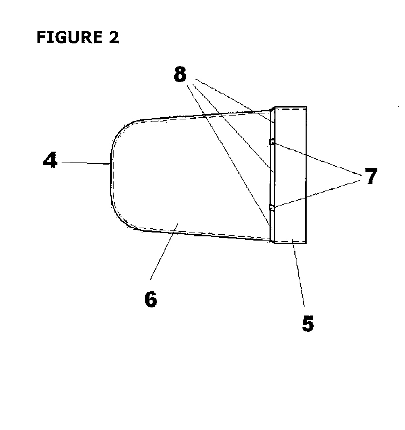

FIGURE 2 shows the other part (4) of the capsule, revealing the greater ring (5), the union of which to the body of said part (6) is established by several union points (7) such that the space between the union points configures the slits (8) that will house the spear lock.

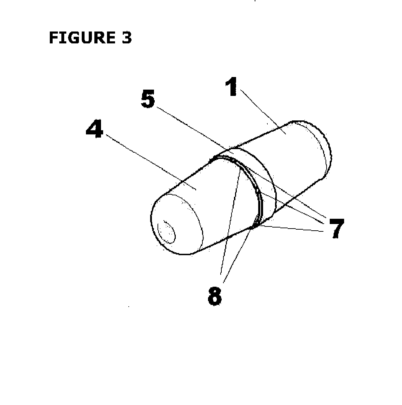

FIGURE 3 shows the capsule closed with the two parts (1) and (4) solidly joined by the spear lock, revealing the ring (5), the spear lock housing slits (8) and the union points (7) which, when the capsule is opened again, will break.

### DESCRIPTION OF AN EMBODIMENT OF THE INVENTION

As described above, the invention consists of a security system for delivery via pneumatic mail based on an unequivocal identification of the container capsule and on its special configuration which, once closed, cannot be opened without breaking it.

There are many possible embodiments of the invention, as many as there are unique and unequivocal identification systems combined with all the ways to configure capsules that will break when opened, the present invention extending to any of these embodiments, notwithstanding which a specific embodiment of the invention will be described to comply with legal requirements.

The present invention comprises a hollow body in the form of a capsule made of a strong material, composed of at least two parts (1) and (4), one of which engages in the other, being solidly joined by a locking clip system constituted by tabs or ledges (2) with a half-arrow cross-section that configure the spear lock that crowns one of the parts and which engage in the slits (8) present in the other part.

One of the parts of the capsule is transparent in order to reveal its contents, while the other is not, or at least not completely, allowing to print an identification code on it with suitable contrast.

This identification code is unique, that is, an identical one does not exist, and as soon as it is used it is referenced in a computer program so that it cannot be used again.

It is advisable to use linear or two-dimensional codes as they are easy to read electronically, although other possible options are not ruled out.

With this system, the sender will enter the capsule identification code and a description of its contents in a database and Introduce the capsule in the channeling system.

The capsule, duly closed, is transported along the pipes and devices until reaching its recipient, who can access the database previously fed by the sender to check that the contents of the capsule agree with what was entered in the database by the sender at the time of delivery.

The capsule can only be opened by breaking the union points (7) between the greater ring (5) of the capsule and the capsule body itself, thereby evidencing whether the capsule has been opened in its path.

## Claims

1. SECURITY SYSTEM FOR PNEUMATIC MAIL AND DEVICE FOR APPLICATION THEREOF essentially **characterised in that** the capsule in which the objects to be transported are inserted is constituted by at least two parts (1) and (4) that are joined by a spear lock (3) such that once closed it cannot be opened without being broken, wherein the capsule is identified uniquely and unequivocally and the sender enters in a database the capsule identification and, optionally but preferably, a description of the contents it carries, so that this database can be queried by the recipient to check that the actual contents of the capsule and the contents entered in said database agree.

2. SECURITY SYSTEM FOR PNEUMATIC MAIL AND DEVICE FOR APPLICATION THEREOF according to the previous claim essentially **characterised in that** the capsule is composed of at least two parts that are solidly joined by one of them being provided with tabs (2) with ends having a half-arrow cross-section integrating a spear lock (3) specifically conceived to engage a series of peripheral slits (8) made in the other part of the capsule.

3. SECURITY SYSTEM FOR PNEUMATIC MAIL AND DEVICE FOR APPLICATION THEREOF according to previous claims essentially **characterised in that** the peripheral slits (8) present in the upper part of the capsule divide this part of the capsule into two areas, one constituted by a ring or socket (5) coinciding with the point of greatest diameter of the part, this ring being joined to the body or dome of the part by a series of points (7) ready to be broken.

4. SECURITY SYSTEM FOR PNEUMATIC MAIL AND DEVICE FOR APPLICATION THEREOF according to previous claims essentially **characterised in that** at least one part of the surface of the capsule is not transparent.

5. SECURITY SYSTEM FOR PNEUMATIC MAIL AND DEVICE FOR APPLICATION THEREOF according to previous claims essentially **characterised in that** the capsule in use incorporates an identification code that can be printed on the surface of the capsule, preferably in a non-transparent area.

6. SECURITY SYSTEM FOR PNEUMATIC MAIL AND DEVICE FOR APPLICATION THEREOF according to previous claims essentially **characterised in that** the code that identifies each capsule is unique and unequivocal.

7. SECURITY SYSTEM FOR PNEUMATIC MAIL AND DEVICE FOR APPLICATION THEREOF according to previous claims essentially **characterised in that** the sender enters in a database the code that identifies the capsule as well as an identification of its contents.

8. SECURITY SYSTEM FOR PNEUMATIC MAIL AND DEVICE FOR APPLICATION THEREOF according to previous claims essentially **characterised in that** the recipient can query the database to know the capsule contents stated by the sender.

9. SECURITY SYSTEM FOR PNEUMATIC MAIL AND DEVICE FOR APPLICATION THEREOF essentially **characterised in that** the force that joins the two parts of the capsule by the action of the spear lock is greater than the strength of the points (7) that join the greater ring (5) of the upper part of the capsule to the actual body of the capsule.
